Europäisches Patentamt

European Patent Office

Office européen des brevets

(19)

(11) Veröffentlichungsnummer : **0 122 975**
**B1**

(12) **EUROPÄISCHE PATENTSCHRIFT**

(45) Veröffentlichungstag der Patentschrift :
06.05.87

(51) Int. Cl.⁴ : **F 01 P 11/14, G 01 M 3/22**

(21) Anmeldenummer : **83112975.4**

(22) Anmeldetag : **22.12.83**

(54) **Vorrichtung und Verfahren zum Erkennen von Undichtigkeiten des Verbrennungssystems einer wassergekühlten Brennkraftmaschine.**

(30) Priorität : **23.11.83 DE 3342242**
**30.03.83 DE 3311611**

(43) Veröffentlichungstag der Anmeldung :
**31.10.84 Patentblatt 84/44**

(45) Bekanntmachung des Hinweises auf die Patenterteilung : **06.05.87 Patentblatt 87/19**

(84) Benannte Vertragsstaaten :
**AT BE CH FR LI**

(56) Entgegenhaltungen :
**GB-A- 1 438 913**
**US-A- 3 054 391**
**US-A- 3 625 656**

(73) Patentinhaber : **Deissler, Hubert**
**Ziegelsteige 9**
**D-6950 Mosbach (Baden) (DE)**

(72) Erfinder : **Deissler, Hubert**
**Ziegelsteige 9**
**D-6950 Mosbach (Baden) (DE)**

(74) Vertreter : **Fischer, Wolf-Dieter, Dipl.-Ing.**
**Patentanwälte Dipl.-Ing. A.H. Fischer Dipl.-Ing. W.D.**
**Fischer Kurfürstenstrasse 32**
**D-6700 Ludwigshafen/Rhein (DE)**

EP 0 122 975 B1

**Beschreibung**

Die Erfindung betrifft eine Vorrichtung zum Erkennen von Undichtigkeiten des Verbrennungssystems einer wassergekühlten Brennkraftmaschine durch Analysieren von Gas aus dem Kühlwasserkreislauf auf Gehalt an Kohlenmonoxid und/oder Kohlendioxid mit einer Sonde, die eine Kammer aufweist, welche Kammer mit ihrem einströmseitigen Ende dichtend an die Einfüllöffnung des Kühlwasserbehälters des Kühlwasserkreislaufes anschließbar ist und mit ihrem anderen Ende an eine Saugeinrichtung angeschlossen ist und mit einer Meßeinrichtung für Gasanalyse sogseitig der Saugeinrichtung.

Die Erfindung betrifft außerdem ein Verfahren zum Erkennen von Undichtigkeiten des Verbrennungssystems einer wassergekühlten Brennkraftmaschine durch Analysieren von Gas aus dem Kühlwasserkreislauf auf Gehalt an Kohlenmonoxid und/oder Kohlendioxid, bei dem bei laufender Brennkraftmaschine aus dem Gasbereich des Kühlwassersystems Meßgas abgesaugt und an einer Meßstelle vorbeigesaugt wird und bei dem an der Meßstelle der Gehalt des Meßgases an Kohlenmonoxid und/oder Kohlendioxid gemessen wird, die auf Verbrennungsgas der Brennkraftmaschine schließen lassen.

Wenn in das Kühlwassersystem durch Fehlfunktion Luft oder Abgas gelangt, dann zeigt sich das durch eine Fehleranzeige, durch Überlaufen des Kühlwassers an einem Sicherheitsventil oder dergleichen. Ursache kann eine Undichtigkeit des Kühlwassersystems sein, durch die Außenluft angesaugt wird, oder eine Undichtigkeit der angrenzenden Teile der Brennkraftmaschine sein, zum Beispiel eines Dichtungsringes, durch die Abgas angesaugt wird. Bei der Suche nach der Undichtigkeit kann man diese eingrenzen, indem man das im Kühlwassersystem befindliche Gas auf Kohlenmonoxidgehalt untersucht. Ist kohlenmonoxid vorhanden, dann liegt die Undichtigkeit in einem Teil der Brennkraftmaschine, ist kein Kohlenmonoxid vorhanden, dann liegt die Undichtigkeit in einem anderen Teil des Kühlwassersystems, durch das Außenluft eindringt. Zu diesem Zweck wird nach einem bekannten Verfahren (GB-A-1 438 913 und US-A-3 625 656) etwas Gas dem Kühlwassersystem entnommen, durch einen mit Testflüssigkeit gefüllten Testbehälter gedrückt, dessen Testflüssigkeit mit dem Kohlenmonoxid — so solches vorhanden — reagiert und einen Farbumschlag erfährt. Für jede Untersuchung wird dazu neue Testflüssigkeit benötigt.

Der Erfindung liegt die Aufgabe zugrunde, den mit der ständigen Neubeschaffung und dem Nachfüllen von Testflüssigkeit verbundenen Aufwand zu vermeiden und die bei der Kohlenmonoxid-Abgasuntersuchung verwendeten, auf der Infrarotabsorptionsmessung beruhenden Geräte für das Erkennen von Undichtgkeiten des Verbrennungssystems einer wassergekühlten Brennkraftmaschine nutzbar zu machen.

Diese Aufgabe wird bei der Vorrichtung dadurch gelöst, daß die Kammer als Wasserabscheidkammer ausgebildet ist, daß in der Sonde ein durch das abgeschiedene Wasser betätigbares, schwimmergesteuertes Absperrventil vorgesehen ist und daß die als Durchlaufmeßvorrichtung ausgebildete Meßvorrichtung für Gasanalysen strom ab der Kammer und dem Absperrventil jedoch stromauf einer Pumpe als Saugeinrichtung für das Meßgas angeordnet ist.

Diese Aufgabe wird bei dem Verfahren dadurch gelöst, daß das vom Meßgas mitgerissene Wasser abgeschieden wird, ehe das Meßgas an die Meßstelle gelangt, daß das abgeschiedene Wasser gesammelt wird und daß in Abhängigkeit vom mitgerissenen Wasser der Meßgasstrom von der Meßstelle abgesperrt wird.

Die Erfindung ist anwendbar in Verbindung mit der Messung des CO-Gehaltes in Abgasen für die Fälle, in denen das Abgas der Brennkraftmaschine normalerweise hinreichend CO enthält.

Die Erfindung macht sich den Umstand zunutze, daß aufgrund der modernen Abgasverordnungen in Kraftfahrzeugreparaturwerkstätten, wo solche Prüfungen durchgeführt werden, Kohlenmonoxid-Testgeräte für die Überprüfung des Kohlenmonoxidgehaltes im Abgas zur Verfügung stehen, die wegen der für die Abgasuntersuchung erforderlichen Genauigkeit entsprechend genau und aufwendig ausgebildet sind und auf Infrarotabsorptionsmessung beruhen. Die Erfindung gestattet es, mit solchen an sich vorhandenen Geräten den CO-Gehalt auch im Kühlwassersystem zu messen.

Die Erfindung nutzt dabei auch die aus anderen Gründen sowieso erforderliche hohe Meßgenauigkeit der vorhandenen CO-Meßgeräte aus und macht sie für das eingangs erwähnte Verfahren nutzbar.

In denjenigen Fällen, in denen das Abgas der Brennkraftmaschine kein oder nur sehr wenig CO enthält, wird zweckmäßig der Gehalt an Kohlendioxid in Meßgas gemessen. Die Rückschlüsse auf Undichtigkeiten können dann entsprechend wie bei der CO-Messung gezogen werden.

An sich genügt es zur Feststellung des Gehaltes an Kohlenmonoxid und/oder Kohlendioxid eine hinreichende Menge Meßgas abzusaugen und zu vermessen. Wenn das Ergebnis negativ ist, also kein Kohlenmonoxid und/oder Kohlendioxid im Meßgas festgestellt werden, die für Verbrennungsgase charakteristisch sind, wird aufgrund der Vorgeschichte auf eine Undichtigkeit im sonstigen Kühlwassersystem geschlossen. Diese Diagnose kann man aber erhärten, indem das Meßgas an einer Absaugstelle abgesaugt wird, die gegenüber Nebenluft abgesperrt ist, und der Wassergehalt des Meßgases kondensiert und abgeschieden wird, ehe das Meßgas an die Meßstelle gelangt.

Wenn dann nur Kohlendioxid angezeigt aber dennoch Luft angesaugt wird, kann diese Luft nur von einer Undichtigkeit herrühren, die an einer Stelle des Kühlwassersystems außerhalb der Brennkraftmaschine liegt.

Es empfiehlt sich, vor der Meßstelle den Wassergehalt zu entfernen, um die Messung nicht zu beeinträchtigen. Da in einem fehlerfrei arbeitenden Kühlwassersystem außer Wasserdampf nur eine ganz begrenzte Gasmenge vorhanden ist, wird diese Gasmenge nach kurzer Absaugzeit aufgebraucht sein, sofern von außen kein weiteres Gas in das Kühlwassersystem dringen kann.

Wenn das Kühlwassersystem dicht ist, wird sich nach kurzer Absaugzeit das Vakuum einstellen und das ist dann ein sicheres Zeichen dafür, daß das Kühlwassersystem dicht ist, also weder zur Brennkraftmaschine noch nach außen eine Undichtigkeit aufweist. Das Vakuum ist dabei kein physikalisches Vakuum, sondern ein technisches Vakuum, denn angesichts der Tatsache, daß die Wasserabscheidung nur bis zu einem gewissen Grad vorgenommen wird, wird sich in dem Bereich zwischen Wasserabscheidung und Saugpumpe immer eine geringe Wasserdampfmenge befinden.

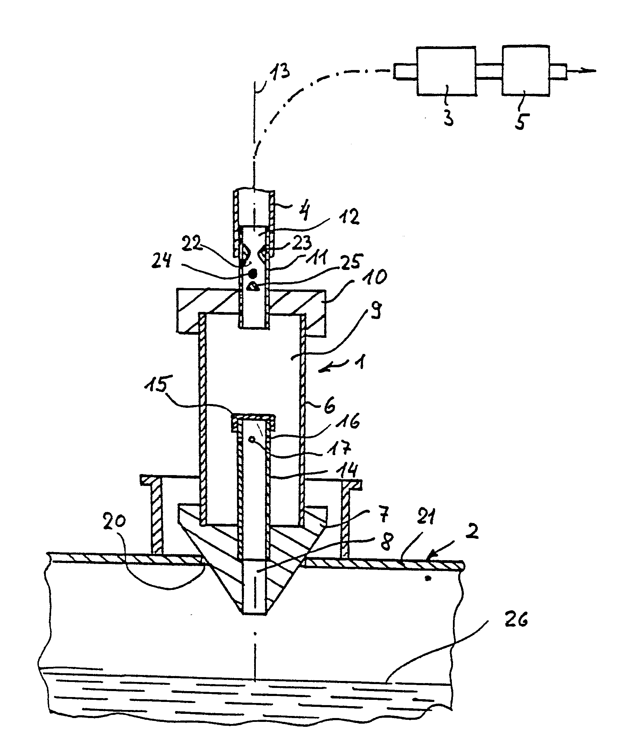

Die Erfindung wird anhand der beigefügten Zeichnung näher erläutert.

Die Zeichnung zeigt eine Sonde mit zugehöriger Durchlaufmeßeinrichtung im Querschnitt.

In der Zeichnung ist mit 1 allgemein die Sonde bezeichnet, die an den Kühlwasserbehälter 2 des Kühlwasserkreislaufs einer wassergekühlten Brennkraftmaschine angeschlossen ist. Mit 3 ist eine Durchlaufmeßvorrichtung für Gasanalysen bezeichnet, die über eine Schlauchleitung 4 an die Sonde 1 angeschlossen ist und ihrerseits an die Saugseite einer Gaspumpe 5 angeschlossen ist, deren Druckseite ins Freie führt. Die Durchlaufmeßvorrichtung 3 gestattet es, Gasanalysen durchzuführen auf den Gehalt an Kohlenmonoxid und Kohlendioxid des durchlaufenden Meßgases und gestattet es auch, das in der Zeiteinheit durchfließende Gasvolumen zu messen.

Die Sonde 1 besteht aus einem Rohrstück 6 aus durchsichtigem Material, zum Beispiel Glas oder Kunststoff, das an seinem unten gezeichneten, einlaufseitigen Ende durch eine sich zu seinem Einlaufende hin verjüngenden Konus 7 abgeschlossen ist. Der Konus 7 besteht aus Gummi oder gummielastischem Kunststoff und weist einen Einlaßkanal 8 auf, der in die von dem Rohrstück 6 umschlossene Wasserabscheidkammer 9 mündet. An seinem oben gezeichneten Auslaßende ist das Rohrstück 6 durch eine Kappe 10 verschlossen, die von einem Anschlußstutzen 11 durchsetzt ist, der einen Auslaßkanal 12 aufweist.

Das Rohrstück 6 ist kreiszylindrisch zur Achse 13. Der Konus 7 und der Anschlußstutzen 11 sind koaxial zur Achse 13 ausgebildet und angeordnet. In Verlängerung des Einlaßkanals 8 erstreckt sich ein Steigrohrstutzen 14, dessen Ende durch eine Kappe 15 verschlossen ist. Unterhalb der Kappe 15 sind auf den Umfang verteilt mehrere Auslaßöffnungen 16, 17 vorgesehen.

Die Sonde 1 sitzt mit dichtem Sitz eingesteckt in die kreisrunde Einfüllöffnung 20 des Kühlwasserbehälters 2. Die Einfüllöffnung 20 befindet sich in der horizontalen oberen Wand 21 des Kühlwasserbehälters 2 und ist demzufolge horizontal und nach oben offen, so daß die Sonde wie gezeichnet mit vertikaler Achse 13 eingesteckt ist und sich in Funktionsstellung befindet.

In dem Anschlußstutzen 11 ist ein Wasserabscheideventil 22 untergebracht. Zu dem Wasserabscheideventil 22 gehört eine in Wasser schwimmfähige Kugel 24, dieser nachgeordnet ein Ventilsitz 23 und der Kugel 24 vorgeordnet eine Halterung 25.

Solange sich kein Wasser im Anschlußstutzen 11 befindet, ruht die Kugel 24 auf der Halterung 25 und gibt den Gasdurchlaß durch den Anschlußstutzen 11 frei. Gelangt Wasser in den Anschlußstutzen 11, dann wird die Kugel schwimmend hochgetragen, lehnt sich gegen den Ventilsitz 23 und sperrt den Anschlußstutzen 11 für die weitere Druchströmung ab.

Auf dem Anschlußstutzen 11 steckt der Schlauch 4, der zum Einlaßanschluß der Durchlaufmeßvorrichtung 3 führt. In der Durchlaufmeßvorrichtung 3 wird der Kohlenmonoxidgehalt und/oder der Kohlendioxidgehalt des durchströmenden Meßgases laufend gemessen. Vorzugsweise handelt es sich dabei um eine Absorptionsmessung im Infrarotbereich.

Die Vorrichtung wird wie folgt betrieben. Bei laufender Brennkraftmaschine wird die Sonde in die gezeichnete Funktionsstellung gebracht und die Gaspumpe 5 eingeschaltet. Es wird auf diese Weise oberhalb des Kühlwasserspiegels 26 befindliches Gas abgesaugt. Dieses Gas strömt durch den Einlaßkanal 8 und die Öffnungen 16, 17 in die Wasserabscheidkammer 9. Wassergehalt wird kondensieren und nach unten abfließen und sammelt sich im unteren Bereich der Wasserabscheidkammer 9. Das trockene Gas strömt durch den Schlauch 4 als Meßgas zur Durchlaufmeßvorrichtung, wird dabei vermessen und strömt dann durch die Gaspumpe 5 ins Freie.

Gelangt nach einer kurzen Anlaufzeit kein Gas mehr an die Durchlaufmeßvorrichtung, dann ist das ein Zeichen dafür, daß der Kühlwasserkreislauf dicht ist, denn es wird nur Wasserdampf angesaugt, der in der Wasserabscheidkammer 9 abscheidet. Wird Luft angesaugt, aber kein Kohlenmonoxid und kein Kohlendioxid in dieser Luft festgestellt, dann ist das ein Zeichen dafür, daß das Kühlwassersystem undicht ist, aber nicht im Bereich der Brennkraftmaschine. Wird dagegen Luft angesaugt mit einem Gehalt an Kohlenmonoxid und/oder Kohlendioxid, dann ist das ein Zeichen dafür, daß der Kühlwasserkreislauf im Bereich der Brennkraftmaschine undicht ist.

**Patentansprüche**

1. Vorrichtung zum Erkennen von Undichtigkeiten des Verbrennungssystems einer wassergekühlten Brennkraftmaschine durch Analysieren von Gas aus dem Kühlwasserkreislauf auf Gehalt an Kohlenmonoxid und/oder Kohlendioxid, mit einer Sonde (1), die eine Kammer (9) aufweist, welche Kammer (9) mit ihrem einströmseitigen Ende dichtend an die Einfüllöffnung (20) des Kühlwasserbehälters (2) des Kühlwasserkreislaufes anschließbar ist und mit ihrem anderen Ende an eine Saugeinrichtung (5) angeschlossen ist und mit einer Meßeinrichtung (3) für Gasanalyse sogseitig der Saugeinrichtung (5), dadurch gekennzeichnet, daß die Kammer (9) als Wasserabscheidkammer ausgebildet ist, daß in der Sonde (1) ein durch das abgeschiedene Wasser betätigbares, schwimmergesteuertes Absperrventil (23, 24, 25) vorgesehen ist und daß die als Durchlaufmeßvorrichtung (3) ausgebildete Meßvorrichtung für Gasanalysen stromab der Kammer (9) und dem Absperrventil (23, 24, 25) jedoch stromauf einer Pumpe (5) als Saugeinrichtung für das Meßgas angeordnet ist.

2. Vorrichtung nach Anspruch 1, dadurch gekennzeichnet, daß die Wande (6) der Kammer (9) durchsichtig sind.

3. Vorrichtung nach Anspruch 1 oder 2, dadurch gekennzeichnet, daß am auslaufseitigen Ende der Kammer (9) ein als Schlauchkupplung ausgebildeter Anschlußstutzen (11) vorgesehen ist, der über einen Schlauch (4) an die Durchlaufmeßvorrichtung (3) angeschlossen ist.

4. Vorrichtung nach einem der vorhergebenden Ansprüche, gekennzeichnet, durch einen Steigrohrstutzen (14) der in koaxialer Verlängerung des Einlaßkanals (8) bis in die Mitte der Wasserabscheidkammer (9) ragt, an seinem Ende verschlossen ist und in der Nähe des verschlossenen Endes auf dem Umfang verteilt Austrittsöffnungen (17) aufweist.

5. Vorrichtung nach einem der vorhergehenden Ansprüche, dadurch gekennzeichnet, daß das Wasserabsperrventil (22) eine wasserschwimmfähige Kugel (24) aufweist, mit einem der Kugel in Strömungsrichtung nachgeordneten Ventilsitz (23), auf den die Kugel sperrend paßt und mit einer in Strömungsrichtung der Kugel vorgeordneten Halterung (25) für die Kugel.

6. Verfahren zum Erkennen von Undichtigkeiten des Verbrennungssystems einer wassergekühlten Brennkraftmaschine durch Analysieren von Gas aus dem Kühlwasserkreislauf auf Gehalt an Kohlenmonoxid und/oder Kohlendioxid, bei dem bei laufender Brennkraftmaschine aus dem Gasbereich des Kühlwassersystems Meßgas abgesaugt und an einer Meßstelle vorbeigesaugt wird und bei dem an der Meßstelle der Gehalt des Meßgases an Kohlenmonoxid und/oder Kohlendioxid gemessen wird, die auf Verbrennungsgas der Brennkraftmaschine schließen lassen, unter Verwendung einer Vorrichtung nach Anspruch 1, dadurch gekennzeichnet, daß das vom Meßgas mitgerissene Wasser abgeschieden wird, ehe das Meßgas an die Meßstelle gelangt, daß das abgeschiedene Wasser gesammelt wird und daß in Abhängigkeit vom mitgerissenen Wasser der Meßgastrom von der Meßstelle abgesperrt wird.

**Claims**

1. Device for detection of leaks in the combustion system of a water-cooled combustion engine by analysing gas from the cooling water circuit for carbon monoxide and/or carbon dioxide content, using a probe (1) which is fitted with a chamber (9), the chamber (9) being capable of forming a sealed connection at its outlet to the filler opening (20) for the cooling water tank (2) of the cooling water circuit and having the other end connected to a suction device (5), and with a measuring device (3) for gas analysis on the suction side of the suction device (5), characterised in that, the probe (1) is fitted with a float-controlled shut-off valve (23, 24, 25) capable of being operated by the separated water and that the measuring device for gas analysis, designed as a flowmeter (3), is arranged downstream of chamber (9) and the shut-off valve (23, 24, 25) is, however, upstream of a pump (5) as a suction device for the measuring gas.

2. Device in accordance with Claim 1, characterised in that, the walls (6) of chamber (9) are transparent.

3. Device in accordance with Claim 1 or 2, characterised in that, on the outlet side of chamber (9) a connecting adapter (11) for a hose connection is provided, the adapter being connected via hose (4) to flowmeter (3).

4. Device in accordance with the foregoing claims, characterised in that, a riser pipe (14), which in the coaxial extension of inlet channel (8) projects into the centre of water separator chamber (9), is closed at its end and has outlet holes (17) distributed around the circumference close to the closed end.

5. Device in accordance with the foregoing claims, characterised in that, the water shut-off valve (22) has a ball (24) capable of floating on water, with a valve seat (23) after the ball in the direction of flow, on which the ball seats to form a seal and with a retainer (25) for the ball arranged before the ball in the direction of flow.

6. Method for detection of leaks in the combustion system of a water-cooled combustion engine by analysing gas from the cooling water circuit for the presence of carbon monoxide and/or carbon dioxide, whereby with the combustion engine running measuring gas is sucked from the gas area of the cooling water system and drawn past a measuring point whereby the carbon monoxide and/or carbon dioxide content of the measuring gas in measured at the measuring point enabling combustion gas from the combustion engine to be determined using a device in accordance with Claim 1, characterised in that, the water entrained by the measuring gas reaches the measuring point, the separated water is collected and the measuring gas stream is shut-off from the measuring point depending on the entrained water.

**Revendications**

1. Dispositif pour détecter des défauts d'étanchéité dans le système de combustion d'un moteur à combustion interne refroidi par eau, en analysant la teneur en oxyde de carbone et/ou en gaz carbonique du gaz provenant du circuit d'eau de refroidissement, le dispositif comportant une sonde (1) comprenant une chambre (9) dont l'extrémité côté arrivée peut être raccordée de façon étanche à l'ouverture d'entrée (20) du réservoir d'eau de refroidissement (2) du circuit d'eau de refroidissement, et dont l'autre extrémité est raccordée à un dispositif d'aspiration (5), et un dispositif de mesure (3) pour l'analyse du gaz du côté aspiration du dispositif d'aspiration (5), caractérisé en ce que la chambre (9) est réalisée en tant que chambre de séparation d'eau, en ce qu'on prévoit dans la sonde (1) un clapet d'arrêt (23, 24, 25) commandé par flotteur, pouvant être actionné par l'eau séparée, et en ce que le dispositif de mesure réalisé en tant que dispositif de mesure en continu (3) pour l'analyse du gaz est monté en aval de la chambre (9) et du clapet d'arrêt (23, 24, 25), mais toutefois en amont d'une pompe, en tant que dispositif d'aspiration pour le gaz à mesurer.

2. Dispositif selon la revendication 1, caractérisé en ce que les parois (6) de la chambre (9) sont transparentes.

3. Dispositif selon la revendication 1 ou 2, caractérisé en ce qu'on prévoit à l'extrémité côté sortie de la chambre (9) un raccord (11) réalisé sous forme de raccord de tuyaux souples, qui est raccordé par un tuyau souple (4) au dispositif de mesure en continu (3).

4. Dispositif selon l'une des revendications précédentes, caractérisé par un tuyau ascendant (14) qui va dans le prolongement coaxial du conduit d'admission (8) jusqu'au milieu de la chambre de séparation (9) qui est fermé à son extrémité et qui comporte à proximité de l'extrémité fermée des orifices de sortie (17) répartis sur la périphérie.

5. Dispositif selon l'une des revendications précédentes, caractérisé en ce que le clapet d'arrêt d'eau (22) comporte une bille (24) pouvant flotter sur l'eau, un siège de clapet (23) monté en aval de la bille dans le sens du courant, sur lequel la bille vient d'adapter en faisant bouchon, et un support (25) pour la bille monté en amont de la bille dans le sens du courant.

6. Procédé pour détecter des défauts d'étanchéité dans le système de combustion d'un moteur à combustion interne refroidi par eau en analysant la teneur en oxyde de carbone et/ou en gaz carbonique du gaz provenant du circuit d'eau de refroidissement, selon lequel, alors que le moteur à combustion interne tourne, le gaz à mesurer est aspiré de la zone de gaz du système d'eau de refroidissement et, ce faisant, passe devant un emplacement de mesure, et selon lequel, à l'emplacement de la mesure, la teneur en oxyde de carbone et/ou en gaz carbonique est mesurée, ce qui permet de tirer des conclusions sur les gaz de combustion, le procédé utilisant un dispositif selon la revendication 1, caractérisé en ce que l'eau entraînée par le gaz à mesurer est séparée avant que le gaz à mesurer arrive à l'emplacement de la mesure, en ce que l'eau séparée est collectée, et en ce qu'en fonction de l'eau entraînée, le courant de gaz à mesurer est arrêté par l'emplacement de mesure.